(19) Europäisches Patentamt

European Patent Office

Office européen des brevets

(11) **EP 3 080 507 B1**

(12) **FASCICULE DE BREVET EUROPEEN**

(45) Date de publication et mention
de la délivrance du brevet:
**29.11.2017 Bulletin 2017/48**

(21) Numéro de dépôt: **14827468.1**

(22) Date de dépôt: **02.12.2014**

(51) Int Cl.:
*F16L 53/00* *(2006.01)*     *H01R 4/12* *(2006.01)*
*H01R 4/16* *(2006.01)*     *H01R 4/72* *(2006.01)*
*H05B 3/14* *(2006.01)*     *H05B 3/58* *(2006.01)*
*H05B 3/06* *(2006.01)*     *H01R 4/14* *(2006.01)*

(86) Numéro de dépôt international:
**PCT/FR2014/053135**

(87) Numéro de publication internationale:
**WO 2015/086955 (18.06.2015 Gazette 2015/24)**

(54) **PROCEDE POUR FORMER UNE CONNEXION ELECTRIQUE**

VERFAHREN ZUR HERSTELLUNG EINER ELEKTRISCHEN VERBINDUNG

METHOD FOR FORMING AN ELECTRICAL CONNECTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.12.2013 FR 1362507**

(43) Date de publication de la demande:
**19.10.2016 Bulletin 2016/42**

(73) Titulaire: **Total SA**
**92400 Courbevoie (FR)**

(72) Inventeurs:
• **LEWANDOWSKI, Alexandre**
**F-64000 Pau (FR)**
• **REY-BETHBEDER, Franck**
**F-64000 Pau (FR)**
• **DELAPORTE, Dominique**
**F-64000 Pau (FR)**
• **LECHON, Alain**
**F-64000 Pau (FR)**
• **GELI, Maurice**
**F-64230 Lescar (FR)**
• **BUZARÉ, Yann**
**F-64110 Gelos (FR)**

(74) Mandataire: **Cabinet Plasseraud**
**66, rue de la Chaussée d'Antin**
**75440 Paris Cedex 09 (FR)**

(56) Documents cités:
**WO-A1-2006/077157     FR-A1- 2 958 991**
**FR-A1- 2 958 994     FR-A1- 2 958 995**
**GB-A- 2 403 995**

## Description

### DOMAINE TECHNIQUE

La présente invention est relative à un procédé pour former une connexion électrique sur un dispositif, par exemple une conduite pour le transport d'un fluide nécessitant au moins occasionnellement un réchauffage, ledit fluide comprenant par exemple un hydrocarbure.

### ETAT DE LA TECHNIQUE ANTERIEURE

Plus particulièrement, l'invention concerne un procédé mis en oeuvre sur un dispositif comprenant une couche de chauffage, ladite couche de chauffage comprenant des premières fibres en carbone, premier matériau conducteur d'électricité.

Le dispositif est par exemple une conduite chauffante pour le transport d'un fluide comprenant par exemple un hydrocarbure.

L'invention a donc pour objet de former une connexion électrique sur une telle conduite (pipeline) pour alimenter en électricité une couche composite conductrice d'électricité. Ce type de conduite est utilisé dans des environnements très froids, à terre comme en mer, et parfois en mer à de très grandes profondeurs. Dans ces conditions le fluide peut soit se congeler, soit se coaguler, soit figer, épaissir ou former des dépôts de paraffine ou d'hydrate. Ces transformations du fluide peuvent générer des bouchons et entraver le transport du fluide dans la conduite. C'est pourquoi ces conduites peuvent être chauffées pour éviter ces inconvénients.

Une technique est le chauffage électrique de ces conduites par des lignes conductrices en cuivre placées autour des conduites. Le chauffage est d'abord concentré autour de ces lignes, et se réparti ensuite par conduction. Cette technique est ainsi peu efficace.

Une autre technique est le chauffage électrique de ces conduites par une couche en fibre de carbone. Le document CN2800021-Y décrit une conduite pour le transport d'un hydrocarbure, ayant un tube en plastique renforcé par des fibres de verre, et une première couche en fibre de carbone alimentée électriquement pour réchauffer le tube. Ces conduites produisent un échauffement mieux réparti.

Le document FR-2958991 décrit une conduite perfectionnée pour le transport d'un hydrocarbure, qui comprend en outre une couche de renfort adaptée pour améliorer la tenue mécanique. Ce document décrit en outre des moyens d'assemblages entre conduites et des moyens d'alimentation électrique. Cependant, ces moyens d'alimentation sont peu efficaces et complexes à mettre en oeuvre.

Le document FR-2958994 décrit une couverture chauffante utilisable pour chauffer un élément pour le transport d'un hydrocarbure, tel qu'un pipeline, une conduite, une vanne ou une tête de puits.

Le document FR-2958995 décrit un autre système de chauffage de ces éléments, qui comprend une telle membrane ou couverture souple chauffante.

Le dispositif est ainsi par exemple un dispositif chauffant sensiblement plan, ou recourbé, rigide ou flexible.

### EXPOSE DE L'INVENTION

La présente invention a pour but de perfectionner les moyens d'alimentation électrique pour ces dispositifs comprenant une couche de chauffage ayant des fibres en carbone conductrice d'électricité.

A cet effet, le procédé pour former la connexion électrique comprend les étapes de formation d'une connexion électrique suivantes :

- une étape de préparation d'interface dans laquelle on dépose une couche de jonction formé d'un matériau de jonction conducteur d'électricité sur au moins une zone de la couche de chauffage, et
- une étape de mise en place dans laquelle on dépose sur la couche de jonction une bande de connexion comprenant des deuxièmes fibres formées d'un deuxième matériau conducteur d'électricité, et ladite bande de connexion ayant au moins une portion dépassant dudit dispositif et qui forme une borne pour l'alimentation électrique du dispositif.

Grâce à ces dispositions, une connexion électrique est directement formée. Cette connexion électrique a une faible résistance électrique, et ne provoque pas d'échauffement local en fonctionnement. On évite ainsi un risque d'endommagement du dispositif chauffé. Le dispositif est ainsi plus fiable.

Dans divers modes de réalisation du procédé selon l'invention, on peut éventuellement avoir recours en outre à l'une et/ou à l'autre des dispositions suivantes.

Selon un aspect de l'invention, le dispositif est une conduite pour le transport d'un fluide, et dans lequel la conduite comprend :

- un tube creux interne s'étendant selon une direction longitudinale et destiné à transporter un fluide dans le tube, et
- ladite couche de chauffage située dans l'épaisseur de la conduite, et

on effectue avant lesdites étapes de formation d'une connexion électrique, les étapes suivantes :

- une étape de formation de gorge dans laquelle on forme une gorge dans la couche de chauffage, ladite gorge étant destinée à accueillir la connexion électrique, et dans lequel :
- à l'étape de préparation d'interface, la couche de jonction est déposée sur une zone de la couche de chauffage dégagée dans la gorge réalisée lors de l'étape de formation de gorge, et

- à l'étape de mise en place, la bande de connexion est enroulée autour de la conduite, dans la gorge et sur la couche de jonction, et ladite portion dépasse de la gorge.

Selon un aspect de l'invention, la gorge comprend une première surface dans la direction longitudinale et une deuxième surface dans une direction opposée à la direction longitudinale, et dans lequel la couche de jonction est déposée sur une seule surface parmi les première et deuxième surfaces.

Selon un aspect de l'invention, la gorge a une forme en triangle ou en trapèze, ladite gorge s'étendant dans toute l'épaisseur de la couche de chauffage.

Selon un aspect de l'invention, la gorge est formée par usinage de la couche de chauffage.

Selon un aspect de l'invention, on effectue en outre une étape de protection dans laquelle on forme une couche de protection en déposant sur la bande de connexion, une bande composite comprenant des troisièmes fibres noyées dans une matrice, lesdites troisièmes fibres étant formées d'un troisième matériau non conducteur d'électricité.

Selon un aspect de l'invention, après lesdites étapes de formation d'une connexion électrique, on effectue une étape de chauffage dans laquelle on chauffe la connexion électrique pour réticuler au moins la couche de jonction.

Selon un aspect de l'invention, le matériau de jonction est un polymère chargé de particules conductrices d'électricité.

Selon un aspect de l'invention, les particules sont en argent, en cuivre, en graphène, en noir de carbone, en nanotubes de carbone.

Selon un aspect de l'invention, les deuxièmes fibres sont tressées.

Selon un aspect de l'invention, le deuxième matériau est du cuivre.

## BREVE DESCRIPTION DES DESSINS

D'autres caractéristiques et avantages de l'invention apparaîtront au cours de la description suivante d'au moins un de ses modes de réalisation, donné à titre d'exemple non limitatif, en regard des dessins joints.

Sur les dessins :

- la figure la est une vue en coupe longitudinale d'une conduite chauffante composite;
- la figure 1b est une vue transversale de côté de la conduite de la figure 1a ;
- la figure 2 est une vue en coupe longitudinale de la conduite de la figure 1 modifiée selon une première étape du procédé pour former une connexion électrique ;
- la figure 3 est une vue en coupe longitudinale de la conduite de la figure 1 modifiée selon une deuxième étape du procédé pour former une connexion électrique ;
- la figure 4 est une vue en coupe longitudinale de la conduite de la figure 1 modifiée selon une troisième étape du procédé pour former une connexion électrique ;
- la figure 5 est une vue en coupe longitudinale de la conduite de la figure 1 modifiée selon une quatrième étape du procédé pour former une connexion électrique ;
- la figure 6 est un schéma montrant la succession d'étapes d'un mode de réalisation du procédé pour former une connexion électrique sur la conduite de la figure 1 ;
- la figure 7 est une vue en coupe longitudinale d'une conduite sur laquelle on applique plusieurs fois le procédé pour réaliser plusieurs connexions électriques ;
- les figures 8 à 10 sont des sections transversales de conduites réalisées avec trois variantes d'enroulement de la bande de connexion dans la gorge.

Sur les différentes figures, les mêmes références numériques désignent des éléments identiques ou similaires.

## DESCRIPTION DETAILLEE DE MODES DE REALISATION

Dans la présente description, les termes « avant » et « arrière » sont utilisés par rapport à la direction longitudinale X. Les termes « supérieur » ou « vers le haut » et « inférieur » ou « vers le bas » sont utilisés par rapport à la direction verticale Z, vers le haut, perpendiculaire à la direction longitudinale X et à la direction transversale Y.

Le terme « conduite » de la présente invention doit être compris comme étant un dispositif comprenant un tube pour transporter un fluide au moins entre une entrée et une sortie, le dispositif pouvant comporter d'autres éléments, tel qu'une vanne, ou des dérivations multiples.

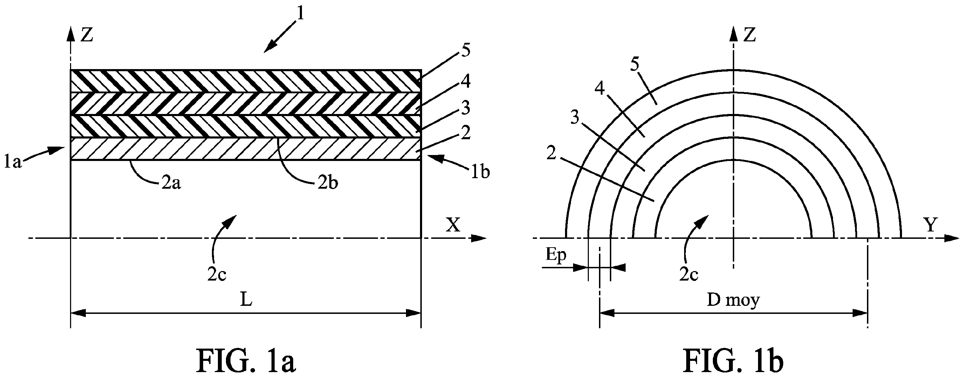

Les **figures 1a et 1b présentent une conduite 1** pour appliquer le procédé selon l'invention, ladite conduite 1 étant en coupe longitudinale selon un plan XZ et en coupe transversale selon un plan YZ. Dans ces figures, seule une moitié supérieure au dessus de l'axe X est présentée, l'autre moitié inférieure étant sensiblement identique par symétrie par rapport à l'axe X.

La conduite 1 comprend un tube 2 creux, s'étendant dans la direction longitudinale d'axe X entre une première et deuxième extrémité 1a, 1b de la conduite. Ce tube 2 comprend une surface interne 2a à proximité de l'axe X, et une surface externe 2b plus éloignée de l'axe X. A l'intérieur de la surface interne 2a s'étend une cavité 2c entre une entrée et une sortie de la cavité situées à chacune des extrémités. La cavité 2c est adaptée pour transporter le fluide entre lesdites entrée et sortie.

La conduite 1 a une section de forme sensiblement cylindrique dans le plan YZ, mais d'autres formes pourraient être réalisées.

Le tube 2 peut être réalisé avec un matériau électriquement conducteur, tel que de l'acier, comme cela est représenté sur les figures pour le présent mode de réalisation de la conduite.

Le tube 2 peut être réalisé avec un matériau électriquement isolant, par exemple un polymère. Ce matériau peut avantageusement être un polyamide (PA), ou un polyfluorure de vinylidène (PVDF).

Sur ce tube 2, il y a par exemple au moins les couches suivantes, depuis l'intérieur (proche de l'axe X) vers l'extérieur (à distance de l'axe X) :

- une première couche d'isolation 3,
- une couche de chauffage 4, et
- une deuxième couche d'isolation 5.

La conduite 1 peut comprendre d'autres couches. Par exemple, le tube peut être recouvert d'une couche de protection pour limiter la corrosion dudit tube, généralement en acier. Par exemple, le tube peut être aussi recouvert d'une couche d'adhésion pour faciliter l'adhésion de la couche suivante (couche d'isolation 3) sur ledit tube. Par exemple, la conduite peut aussi comprend une couche externe d'isolation thermique, par exemple au dessus ou intégrée à la deuxième couche d'isolation 5.

Les première et deuxième couches d'isolation électrique 3, 5 sont électriquement isolantes. Elles sont par exemple constituées d'un polymère ou d'un composite comprenant des fibres de verre noyées dans le polymère (matrice) ou d'un composite comprenant des fibres de kevlar noyées dans le polymère. Le polymère est avantageusement adapté pour bien adhérer aux autres couches : le tube 2 et la couche de chauffage 4. Ce polymère est éventuellement identique à celui utilisé dans la couche de chauffage 4 et/ou dans le tube 2 comme cité ci-dessus.

La couche de chauffage 4 est un composite comprenant au moins des fibres de carbone noyées dans un polymère. Ce polymère peut avantageusement être un polyamide (PA), ou un polyfluorure de vinylidène (PVDF).

Les fibres de carbone sont aptes à conduire un courant électrique pour chauffer le tube par effet Joule. La résistance électrique **R** d'une telle couche de chauffage 3 entre les première et deuxième extrémités (1a, 1b) de la conduite peut être calculée de manière approchée par la formule suivante :

$$R = \rho_{fibre} \cdot \frac{L}{\pi . D_{moy} . E_p . cos^2 \alpha}$$

dans laquelle :

- $\rho_{fibre}$ est une résistivité des fibres de carbone, ayant par exemple pour valeur $\rho_{fibre} = 1,9.10^{-5}\ \Omega.m$ à une température de 20°C, ce qui est sensiblement 1100 fois plus résistif que le cuivre à 20°C,
- **L** est une longueur de la couche de chauffage 4 entre les première et deuxième extrémités (1a, 1b) selon la direction longitudinale X,
- $D_{moy}$ est un diamètre moyen de la couche de chauffage 4,
- $E_p$ est une épaisseur de la couche de chauffage dans une direction transversale, et
- $\alpha$ est un angle d'inclinaison que forment les fibres de carbone par rapport à la direction de l'axe X.

Grâce à l'angle d'inclinaison des fibres de carbone dans la couche de chauffage 4, on peut obtenir une résistance électrique **R** désirée pour le chauffage.

Grâce à cette couche de chauffage 4 comprenant des fibres de carbone bien réparties dans le matériau polymère de cette couche, le chauffage est plus homogène autour du tube 2. En outre, si une ou plusieurs fibres de carbone étaient rompues à un endroit de la conduite, le courant électrique peut tout de même continuer à passer par les autres fibres de carbone, non rompues. Ainsi, les caractéristiques électriques (résistance) sont peu dégradées.

Les différentes couches de la conduite 1 peuvent être fabriquées par des moyens connus en utilisant des bandes préformées de composite, chaque bande préformée s'étendant selon une direction et comprenant des fibres (carbone, verre ou kevlar) noyées dans une matrice de polymère. Les fibres sont éventuellement orientées dans ladite direction de la bande préformée.

La présente invention a pour but de réaliser la connexion électrique permettant d'alimenter en électricité la couche de chauffage 4 de la conduite 1.

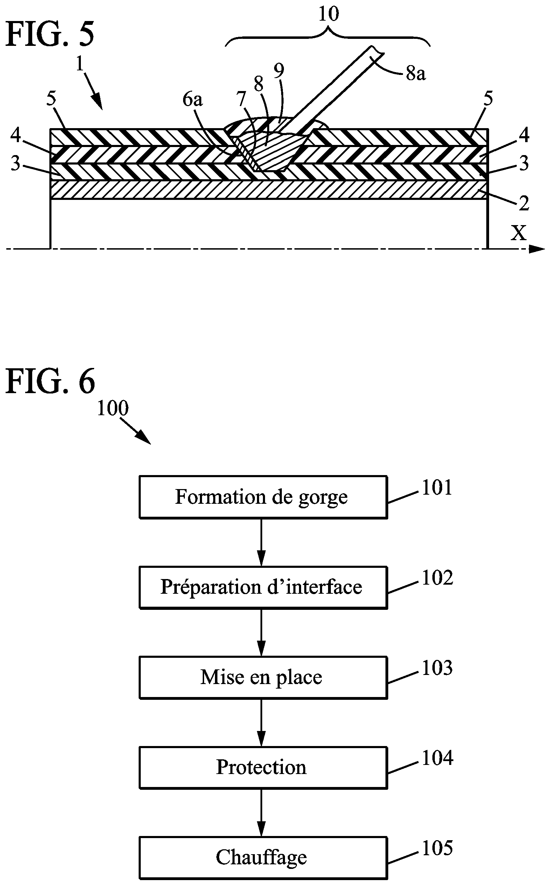

Notamment, il est proposé d'utiliser **un procédé 100 pour former une connexion électrique 10** dans lequel on effectue les étapes suivantes (**figure 6**) :

- une étape de formation de gorge 101 dans laquelle on forme une gorge 6 dans la couche de chauffage 4,
- une étape de préparation d'interface 102 dans laquelle on dépose une couche de jonction 7 formée d'un matériau de jonction conducteur d'électricité sur au moins une zone de la couche de chauffage 4 de la gorge 6, et
- une étape de mise en place 103 dans laquelle on enroule sur la couche de jonction 7 (et éventuellement sur la couche de chauffage) une bande de connexion 8 comprenant des deuxièmes fibres formées d'un deuxième matériau conducteur d'électricité, et ladite bande de connexion 8 ayant au moins une portion 8a dépassant de ladite gorge 6 pour former une borne adaptée pour l'alimentation en électricité de la conduite.

La zone de la couche de chauffage est une partie de ladite couche, sur laquelle la couche de jonction est ajoutée pour améliorer la conduction électrique.

La connexion électrique 10 est donc l'ensemble des éléments suivants : gorge 6 remplie d'au moins d'une couche de jonction 7 et d'une bande de connexion 8.

Additionnellement, les étapes précédentes peuvent être suivies d'une étape de protection 104 dans laquelle on forme une couche de protection 9 en enroulant sur la bande de connexion 8, une bande en composite comprenant des troisièmes fibres noyées dans une matrice, lesdites troisièmes fibres étant formées d'un troisième matériau non conducteur d'électricité, par exemple en verre ou en kevlar.

Enfin, on effectue éventuellement une étape de chauffage 105 dans laquelle on chauffe la connexion électrique 10 pour réticuler au moins la couche de jonction 7, et éventuellement les autres couches de la connexion électrique : la bande de connexion 8, la couche de protection 9.

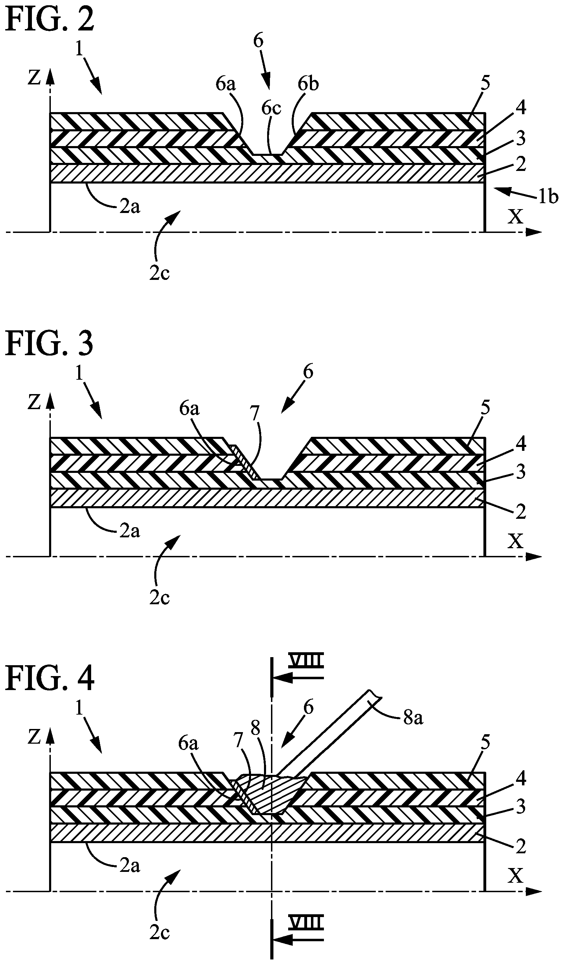

Les figures 2 à 5 représentent la conduite 1 en coupe longitudinale X dans l'état des étapes successives 101 à 104, respectives.

**En figure 2,** la gorge 6 est formée dans une conduite 1 continue, c'est-à-dire ayant sur tout son profil les trois couches empilées sur le tube 2 : la première couche d'isolation 3, la couche de chauffage 4 et la deuxième couche d'isolation 5.

La gorge 6 est par exemple formée par usinage sur cette conduite à l'état brut, par exemple par enlèvement de matière, et par exemple par un procédé de tournage de la conduite.

Cette gorge 6 est une entaille ayant une section radiale en triangle ou trapèze avec au moins deux surfaces 6a, 6b internes latérales qui se font face dans la direction longitudinale X. Ces première et deuxième surfaces 6a, 6b sont avantageusement inclinées par rapport à la direction longitudinale X, par exemple d'un angle compris entre 30 degrés et 60 degrés.

La gorge 6 s'étend depuis l'extérieur vers l'intérieur (vers l'axe X) et traverse au moins la deuxième couche d'isolation 5 la plus externe. Elle traverse ensuite la couche de chauffage 4 partiellement ou entièrement. Elle s'étend également avantageusement selon une faible proportion dans la première couche d'isolation 3, par exemple selon seulement 10 pourcents de son épaisseur. On assure ainsi que toute l'épaisseur de la couche de chauffage 4 est entaillée par la gorge 6.

Dans le cas d'une entaille de section radiale en trapèze, celle-ci comprend en outre une surface de fond 6c qui s'étend horizontalement parallèlement à la direction longitudinale X. La gorge 6 a ainsi une largeur suffisante pour installer la connexion électrique 10

**En figure 3,** on dépose une couche de jonction 7 dans la gorge 6 formée à l'étape précédente. Cette couche de jonction 7 est par exemple déposée sur une seule des deux surfaces parmi la première surface 6a et la deuxième surface 6b. Si la gorge 6 (connexion électrique 10) est réalisée à proximité d'une deuxième extrémité 1b de la conduite 1 dans la direction longitudinale X, et que le courant à générer dans la couche de chauffage 4 devra se propager dans ladite couche vers la première extrémité 1a, il est surtout nécessaire de recouvrir la première surface 6a à l'opposé de la deuxième extrémité 1b, comme cela est représenté sur les figures.

Cette couche de jonction 7 est formée d'un matériau de jonction conducteur d'électricité. Par exemple, le matériau de jonction est un polymère intrinsèquement conducteur d'électricité ou non conducteur d'électricité, et/ou éventuellement chargé de particules conductrices d'électricité. Les particules sont choisies dans une liste comprenant un métal comme l'argent, le cuivre, ou le graphène, le noir de carbone, et les nanotubes de carbone.

Les particules sont des éléments de petite taille de forme sphérique, elliptique ou toute autre forme. Elles ont une taille (plus grande distance) par exemple inférieure à 0,1 mm, et de préférence inférieure à 0,01 mm. Ces particules peuvent ainsi être mélangées ou chargées dans un polymère sans trop affecter sa viscosité. Ces particules sont sous forme de poudre.

Ce matériau de jonction procure à la connexion électrique 10 de très bonnes propriétés de conduction électrique, c'est-à-dire une très faible résistance électrique, ce qui permet d'éviter des échauffements localisés dans ladite connexion électrique 10.

**En figure 4,** on enroule une bande de connexion 8 dans la gorge 6 depuis la surface de fond 6c jusqu'à une épaisseur sensiblement équivalente à la couche de chauffage 4. Cette bande de connexion 8 se superpose à la couche de jonction 7. On laisse libre également une portion 8a de longueur de la bande de connexion 8 hors de la gorge 6 (non enroulée dans la gorge). Cette portion 8a forme une borne de connexion électrique utilisable comme élément pour alimenter la conduite 1 en électricité.

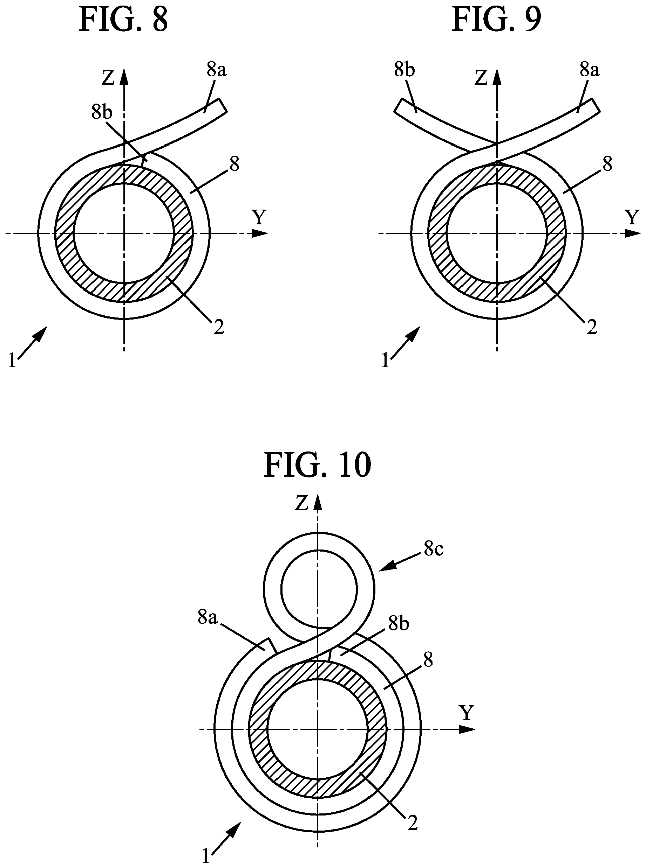

Plusieurs variantes sont envisageables pour effectuer l'enroulement de la bande de connexion 8 dans la gorge 6. Ces variantes sont présentées en fin de description et sur les figures 8 à 10.

La conduite ou un ensemble de conduites électriquement connectées les unes au autres doivent comprendre au moins deux connexions électriques (deux bornes de connexions électriques), la première étant reliée à une première phase de l'alimentation et la deuxième étant reliée à une deuxième phase de l'alimentation, pour générer un courant dans la couche de chauffage 4 de la conduite 1 via les connexions 10. L'alimentation peut être en courant ou en tension, de type continue ou alternative. Cette alimentation a donc au moins deux phases, et est éventuellement triphasée.

La bande de connexion 8 comprend des deuxièmes fibres formées d'un deuxième matériau conducteur d'électricité.

Les deuxièmes fibres sont tressées ou non tressées.

Le deuxième matériau de ces deuxièmes fibres est par exemple du cuivre.

L'ensemble formé en figure 4, couche de jonction 7 et bande de connexion 8 est éventuellement chauffé pour réticuler les polymères des matrices de ses composants.

**En figure 5,** on forme une couche de protection 9 sur la bande de connexion 8 en enroulant sur cette bande de connexion 8 une bande composite comprenant des troisièmes fibres noyées dans une matrice, lesdites troisièmes fibres étant formées d'un troisième matériau non conducteur d'électricité.

Le troisième matériau est par exemple du verre ou du kevlar.

La portion 8a restant libre de la bande de connexion 8 n'est pas recouverte. La bande composite de la couche de protection 9 est enroulée sur un premier côté et sur un deuxième côté de cette portion pour conserver cette portion 8a libre et dépassant de la couche de protection 9.

L'ensemble formé en figure 5, couche de jonction 7, bande de connexion 8 et couche de protection 9 est éventuellement chauffé ou éventuellement à nouveau chauffé pour réticuler les polymères des matrices de ses composants.

Le polymère utilisé dans les matrices des divers matériaux composites est par exemple un polyamide (PA), ou un polyfluorure de vinylidène (PVDF).

Grâce au procédé utilisé, on peut former des connexions électriques à tout endroit dans la longueur de la conduite 1.

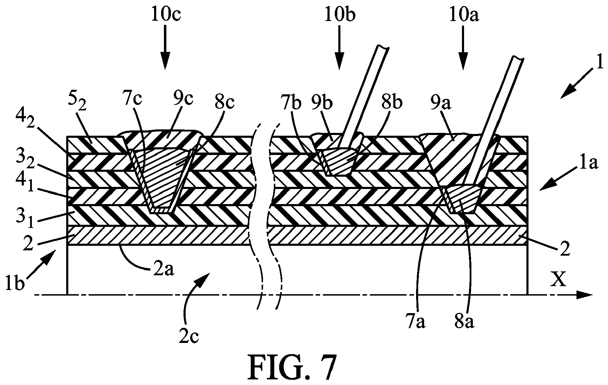

On peut également former des connexions électriques plus ou moins profondes dans les couches d'une conduite, comme cela est montré sur la **figure 7.** Sur cette figure, la conduite 1 comprend cinq couches au dessus du tube 2 :

- une première couche d'isolation $3_1$,
- une première couche de chauffage $4_1$,
- une deuxième couche d'isolation $3_2$,
- une deuxième couche de chauffage $4_2$, et
- une troisième couche d'isolation 5.

Les matériaux de ces couches sont du même type que ceux décrits précédemment. Par exemple, les couches d'isolation $3_1$, $3_2$, 5 sont en fibres de verre noyées dans une matrice polymère, et les couches de chauffage $4_1$, $4_2$ sont en fibres de carbone noyées dans une matrice polymère, avantageusement identique à la précédente.

Dans l'exemple de la figure 7, on forme comme précédemment :

- une première connexion électrique 10a au niveau de la première couche de chauffage $4_1$,
- une deuxième connexion électrique 10b au niveau de la deuxième couche de chauffage $4_2$, et
- une troisième connexion électrique 10c entre les première et deuxième couches de chauffage $4_1$, $4_2$.

La troisième connexion électrique 10c diffère des précédentes en ce qu'elle ne comprend pas de portion libre sortant hors de la conduite 1, et traversant la couche de protection 9c, et en ce que la couche de jonction 7 s'étend dans la gorge 6 de la première couche de chauffage $4_1$ jusqu'à la deuxième couche de chauffage $4_2$.

Les deux autres connexions électriques 10a, 10b possèdent cette portion libre qui sort de chacune des couches de protection respectives 9a, 9b.

Grâce à cette conduite 1 à deux couches de chauffage et à ces trois connexions électriques, les premières et deuxième connexions électriques peuvent être situées d'un même côté de la conduite 1 dans la direction longitudinale X, par exemple à proximité de la deuxième extrémité 1a comme représenté sur la figure. La troisième connexion électrique 10c est située à l'opposé de la conduite à proximité de la deuxième extrémité 1b. La première couche de chauffage fait transiter l'électricité d'une première extrémité à la deuxième extrémité de la conduite 1, alors que la deuxième couche de chauffage fait le retour ; elle fait transiter l'électricité de la deuxième extrémité vers la première extrémité de la conduite 1. L'alimentation électrique de la conduite 1 s'effectuant d'un seul côté, celle-ci est plus facile à réaliser.

Les deux couches de chauffage $4_1$, $4_2$ contribuent au chauffage de la conduite 1 par effet Joule. Une telle conduite 1 est plus efficace thermiquement.

Nous détaillons maintenant par les **figures 8 à 10** des variantes de méthodes pour l'enroulement de la bande de connexion 8 dans la gorge 6.

Dans la première variante de la figure 8, la bande de connexion 8 comprend une première extrémité 8b placée au fond de la gorge 6. La bande est alors enroulée par exemple dans un sens horaire autour de l'axe X, jusqu'à recouvrir ladite première extrémité 8b en une ou plusieurs couches successives, puis s'étendre radialement vers la seconde extrémité 8a qui forme ainsi la portion 8a dite « libre ».

Seul la seconde extrémité 8a de la bande de connexion 8 est laissée libre radialement pour former la borne de connexion électrique.

Dans la deuxième variante de la figure 9, la bande de connexion 8 comprend une première extrémité 8b maintenue radialement à distance de la gorge 6. Elle est alors enroulée dans la gorge 6 par exemple dans un sens horaire autour de l'axe X, selon un ou plusieurs tours. Puis, elle s'étend radialement vers la seconde extrémité 8a qui forme ainsi la portion 8a dite « libre ».

Les deux extrémités 8a, 8b de la bande de connexion 8 sont laissées libres radialement, chaque ou les deux pouvant former la borne de connexion électrique.

Dans la troisième variante de la figure 10, la bande de connexion 8 comprend une première extrémité 8b placée au fond de la gorge 6. La bande est alors enroulée dans un premier sens par exemple horaire autour de l'axe X, jusqu'à recouvrir ladite première extrémité 8b en une ou plusieurs couches successives. Ensuite, elle s'étend radialement en formant une boucle 8c qui revient radialement vers sont point de départ. Ensuite, la bande de connexion 8 est dans un second sens par exemple anti-horaire autour de l'axe X (opposé au premier sens), en recouvrant les couches précédentes en une ou plusieurs couches successives, jusqu'à la seconde extrémité 8a qui peut rester dans la gorge 6.

Les deux extrémités 8a, 8b de la bande de connexion 8 sont dans la gorge 6, et une boucle 8c intermédiaire entre la première et seconde extrémité 8b, 8a, s'étend radialement de manière libre, pour former la borne de connexion électrique.

Le procédé selon l'invention peut également être appliqué à d'autres dispositifs chauffants (autres qu'une conduite), tels que des dispositifs tels que décrits dans les documents FR-2958994 (couverture chauffante) et FR-2958995 (système gonflable ayant une membrane chauffante). On se rapportera aux descriptions de ces documents publiés pour la mise en oeuvre de ceux-ci.

Ainsi, ces dispositifs chauffants comprennent, comme pour une conduite chauffante, une couche de chauffage dans leur épaisseur qui est composée d'un matériau conducteur d'électricité. Ce matériau comprend par exemple des fibres de carbones noyées dans un élastomère.

Dans le cas de tels dispositifs chauffants, le procédé selon l'invention comprend également les étapes suivantes :

- une étape de préparation d'interface 102 dans laquelle on dépose une couche de jonction formée d'un matériau de jonction conducteur d'électricité sur au moins une zone de la couche de chauffage, et
- une étape de mise en place 103 dans laquelle on dépose sur la couche de jonction (et éventuellement sur la couche de chauffage) une bande de connexion comprenant des deuxièmes fibres formées d'un deuxième matériau conducteur d'électricité, et ladite bande de connexion ayant au moins une portion dépassant dudit dispositif et qui forme une borne pour l'alimentation en électricité de ce dispositif.

**Revendications**

1. **Procédé pour former une connexion électrique** sur un dispositif comprenant une couche de chauffage (4), ladite couche de chauffage comprenant des premières fibres en carbone, premier matériau conducteur d'électricité, et dans lequel on effectue les étapes de formation d'une connexion électrique suivantes :

   - une étape de préparation d'interface (102) dans laquelle on dépose une couche de jonction (7) formé d'un matériau de jonction conducteur d'électricité sur la couche de chauffage, et

   - une étape de mise en place (103) dans laquelle on dépose sur la couche de jonction (7) une bande de connexion (8) comprenant des deuxièmes fibres formées d'un deuxième matériau conducteur d'électricité, et ladite bande de connexion ayant au moins une portion (8a ; 8b ; 8c) dépassant dudit dispositif et qui forme une borne pour l'alimentation électrique du dispositif.

2. Procédé selon la revendication 1, dans lequel le dispositif est une conduite pour le transport d'un fluide, et dans lequel la conduite (1) comprend :

   - un tube (2) creux interne s'étendant selon une direction longitudinale (X) et destiné à transporter un fluide dans le tube, et
   - ladite couche de chauffage (4) située dans l'épaisseur de la conduite, et

   dans lequel on effectue avant lesdites étapes de formation d'une connexion électrique :

   - une étape de formation (101) de gorge dans laquelle on forme une gorge (6) dans la couche de chauffage, ladite gorge étant destinée à accueillir la connexion électrique, et

   dans lequel :

   - à l'étape de préparation d'interface (102), la couche de jonction (7) est déposée sur une zone de la couche de chauffage dégagée dans la gorge réalisée lors de l'étape de formation (101) de gorge, et
   - à l'étape de mise en place (103), la bande de connexion (8) est enroulée autour de la conduite (1), dans la gorge et sur la couche de jonction, et ladite portion dépasse de la gorge.

3. Procédé selon la revendication 2, dans lequel la gorge (6) comprend une première surface (6a) dans la direction longitudinale et une deuxième surface (6b) dans une direction opposée à la direction longitudinale, et dans lequel la couche de jonction (7) est déposée sur une seule surface parmi les première et deuxième surfaces.

4. Procédé selon la revendication 2 ou la revendication 3, dans lequel la gorge (6) a une forme en triangle ou en trapèze, ladite gorge s'étendant dans toute l'épaisseur de la couche de chauffage.

5. Procédé selon l'une des revendications 2 à 4, dans lequel la gorge (6) est formée par usinage de la couche de chauffage (4).

6. Procédé selon l'une des revendications 1 à 5, dans lequel on effectue en outre une étape de protection

(104) dans laquelle on forme une couche de protection (9) en déposant sur la bande de connexion (8), une bande composite (9) comprenant des troisièmes fibres noyées dans une matrice, lesdites troisièmes fibres étant formées d'un troisième matériau non conducteur d'électricité.

7. Procédé selon l'une des revendications 1 à 6, dans lequel, après lesdites étapes de formation d'une connexion électrique, on effectue une étape de chauffage (105) dans laquelle on chauffe la connexion électrique pour réticuler au moins la couche de jonction (7).

8. Procédé selon l'une des revendications 1 à 7, dans lequel le matériau de jonction est un polymère chargé de particules conductrices d'électricité.

9. Procédé selon la revendication 8, dans lequel les particules sont en argent, en cuivre, en graphène, en noir de carbone, en nanotubes de carbone.

10. Procédé selon l'une des revendications 1 à 9, dans lequel les deuxièmes fibres sont tressées.

11. Procédé selon l'une des revendications 1 à 10, dans lequel le deuxième matériau est du cuivre.

**Patentansprüche**

1. Verfahren zur Herstellung eines elektrischen Anschlusses an einer Vorrichtung, die eine Heizschicht (4) aufweist, wobei die Heizschicht erste Karbonfasern, ein erstes elektrisch leitendes Material, aufweist und in welchem die folgenden Schritte zur Herstellung eines elektrischen Anschlusses durchgeführt werden:

    - ein Schritt einer Bildung einer Zwischenschicht (102), in welchem eine Verbindungsschicht (7), die aus einem elektrisch leitenden Verbindungsmaterial besteht, an der Heizschicht angeordnet wird;
    - ein Anordnungsschritt (103), in welchem an der Verbindungsschicht (7) ein Anschlussband (8) angeordnet wird, das zweite Fasern aufweist, die aus einem zweiten elektrisch leitenden Material gebildet sind, wobei das Anschlussband mindestens einen Abschnitt (8a; 8b; 8c) hat, der aus der Vorrichtung vorsteht und der eine Anschlussklemme für die elektrische Versorgung der Vorrichtung bildet.

2. Verfahren nach Anspruch 1, in welchem die Vorrichtung eine Leitung für den Transport eines Fluids ist und in welchem die Leitung (1) aufweist:

    - ein hohles Innenrohr (2), das sich in eine Längsrichtung (X) erstreckt und dazu bestimmt ist, um in dem Rohr ein Fluid zu transportieren, und
    - die in der Dicke der Leitung gelegene Heizschicht (4),

und in welchem vor den Schritten der Herstellung eines elektrischen Anschlusses

    - ein Schritt einer Bildung (101) einer Rille durchgeführt wird, in welchem eine Rille (6) in der Heizschicht gebildet wird, wobei die Rille vorgesehen ist, den elektrischen Anschluss aufzunehmen,

und in welchem

    - im Schritt der Bildung einer Zwischenschicht (102) die Verbindungsschicht (7) an einer Zone der Heizschicht angeordnet wird, die in der im Rillenbildungsschritt (101) hergestellten Rille freigelegt wurde, und
    - im Anordnungsschritt (103) das Anschlussband (8) in der Rille und an der Verbindungsschicht um die Leitung (1) herum gewickelt wird, und der Abschnitt aus der Rille vorsteht.

3. Verfahren nach Anspruch 2, in welchem die Rille (6) eine erste Oberfläche (6a) in der Längsrichtung und eine zweite Oberfläche (6b) in einer zur Längsrichtung entgegengesetzten Richtung aufweist und in welchem die Verbindungsschicht (7) entweder an der ersten oder an der zweiten Oberfläche angeordnet wird.

4. Verfahren nach Anspruch 2 oder 3, in welchem die Rille (6) die Form eines Dreiecks oder Trapezes hat, wobei die Rille sich durch die ganze Dicke der Heizschicht erstreckt.

5. Verfahren nach einem der Ansprüche 2 bis 4, in welchem die Rille (6) durch spanabhebende Bearbeitung der Heizschicht (4) gebildet wird.

6. Verfahren nach einem der Ansprüche 1 bis 5, in welchem ferner ein Schutzschritt (104) durchgeführt wird, in welchem durch Anordnen eines Bands (9) aus Verbundmaterial, das in einer Matrix eingebettete dritte Fasern aufweist, eine Schutzschicht (9) gebildet wird, wobei die dritten Fasern aus einem elektrisch nichtleitenden Material gebildet sind.

7. Verfahren nach einem der Ansprüche 1 bis 6, in welchem nach den Schritten der Herstellung eines elektrischen Anschlusses ein Heizschritt (105) durchgeführt wird, in welchem der elektrische Anschluss geheizt wird, um zumindest die Verbindungsschicht (7) zu vernetzen.

8. Verfahren nach einem der Ansprüche 1 bis 7, in welchem das Verbindungsmaterial ein mit elektrisch leitenden Partikeln gefülltes Polymer ist.

9. Verfahren nach Anspruch 8, in welchem die Partikel aus Silber, aus Kupfer, aus Graphen, aus Rußschwarz, aus Kohlenstoffnanoröhrchen sind.

10. Verfahren nach einem der Ansprüche 1 bis 9, in welchem die zweiten Fasern geflochten sind.

11. Verfahren nach einem der Ansprüche 1 bis 10, in welchem das zweite Material Kupfer ist.


**Claims**

1. **Method for forming an electrical connection** on a device comprising a heating layer (4), the said heating layer comprising first fibres made of carbon, a first electrically conducting material, and in which the following steps of forming an electrical connection are performed:

   - an interface-preparation step (102) in which a junction layer (7) formed of an electrically conducting junction material is placed on the heating layer, and
   - a placement step (103) in which a connection strip (8) comprising second fibres formed of a second electrically conducting material is placed on the junction layer (7), the said connection strip having at least one portion (8a; 8b; 8c) protruding beyond the said device and forming a terminal for supplying electrical power to the device.

2. Method according to Claim 1, in which the device is a pipe for transporting a fluid, and in which the pipe (1) comprises:

   - an internal hollow tube (2) extending in a longitudinal direction (X) and intended to transport a fluid along the tube, and
   - the said heating layer (4) situated within the thickness of the pipe, and

   in which before the said steps of forming an electrical connection, there is performed:

   - a groove-formation step (101) in which a groove (6) is formed in the heating layer, the said groove being intended to accommodate the electrical connection, and

   in which:

   - at the interface-preparation step (102), the junction layer (7) is placed over a zone of the heating layer that is uncovered in the groove produced during the groove-formation step (101), and
   - in the placement step (103), the connection strip (8) is wound around the pipe (1), in the groove and on the junction layer, and the said portion protrudes from the groove.

3. Method according to Claim 2, in which the groove (6) comprises a first surface (6a) in the longitudinal direction and a second surface (6b) in a direction opposite to the longitudinal direction, and in which the junction layer (7) is placed on one of the first and second surfaces.

4. Method according to Claim 2 or Claim 3, in which the groove (6) is in the shape of a triangle or of a trapezium, the said groove extending throughout the thickness of the heating layer.

5. Method according to one of Claims 2 to 4, in which the groove (6) is formed by machining of the heating layer (4).

6. Method according to one of Claims 1 to 5, in which a protection step (104) is also performed in which a protective layer (9) is formed by placing on the connection strip (8), a composite strip (9) comprising third fibres embedded in a matrix, the said third fibres being formed of a third material that is not electrically conductive.

7. Method according to one of Claims 1 to 6, in which, after the said steps of forming an electrical connection, a heating step (105) is performed in which the electrical connection is heated in order to crosslink at least the junction layer (7).

8. Method according to one of Claims 1 to 7, in which the junction material is a polymer filled with electrically conducting particles.

9. Method according to Claim 8, in which the particles are made of silver, copper, graphene, carbon black, carbon nanotubes.

10. Method according to one of Claims 1 to 9, in which the second fibres are braided.

11. Method according to one of Claims 1 to 10, in which the second material is copper.

EP 3 080 507 B1

FIG. 1a

FIG. 1b

FIG. 2

FIG. 3

FIG. 4

## FIG. 5

## FIG. 6

| Formation de gorge | 101 |
| Préparation d'interface | 102 |
| Mise en place | 103 |
| Protection | 104 |
| Chauffage | 105 |

FIG. 7

# FIG. 8

# FIG. 9

# FIG. 10

**RÉFÉRENCES CITÉES DANS LA DESCRIPTION**

**Documents brevets cités dans la description**

- CN 2800021 Y
- FR 2958991
- FR 2958994
- FR 2958995